(19) Europäisches Patentamt
European Patent Office
Office européen des brevets

(11) EP 0 662 985 B1

(12) # EUROPÄISCHE PATENTSCHRIFT

(45) Veröffentlichungstag und Bekanntmachung des Hinweises auf die Patenterteilung:
**02.06.1999 Patentblatt 1999/22**

(21) Anmeldenummer: **93920733.8**

(22) Anmeldetag: **15.09.1993**

(51) Int Cl.6: **C08J 9/30**
// C14C11/00,(C08J9/30, C08L75:04)

(86) Internationale Anmeldenummer:
**PCT/EP93/02498**

(87) Internationale Veröffentlichungsnummer:
**WO 94/06852 (31.03.1994 Gazette 1994/08)**

(54) **SPRITZBESTÄNDIGER WÄSSRIGER SCHAUM, DESSEN HERSTELLUNG UND VERWENDUNG**

SPRAY-RESISTANT AQUEOUS FOAM, ITS PRODUCTION AND USE

MOUSSES AQUEUSES STABLES A LA PROJECTION, LEUR FABRICATION ET LEUR APPLICATION

(84) Benannte Vertragsstaaten:
**AT BE CH DE DK ES FR GB GR IE IT LI LU NL PT SE**

(30) Priorität: **16.09.1992 DE 4230997**

(43) Veröffentlichungstag der Anmeldung:
**19.07.1995 Patentblatt 1995/29**

(73) Patentinhaber: **Clariant Finance (BVI) Limited**
**Road Town, Tortola (VG)**

(72) Erfinder:
- **HELBER, Rudolf**
**D-70794 Fliderstadt (DE)**
- **HUBER, Hartmuth**
**D-70736 Fellbach 4 (DE)**
- **KNOCH, Hans**
**D-70567 Stuttgart 80 (DE)**
- **PISCHEL, Thomas**
**D-72581 Dettingen (DE)**
- **REUSCH, Thomas**
**D-72555 Metzingen/Neuhausen (DE)**
- **WALTHER, Werner**
**D-70599 Stuttgart 70 (DE)**

(74) Vertreter: **D'haemer, Jan Constant**
**Clariant International Ltd.,**
**Rothausstrasse 61**
**4132 Muttenz 1 (CH)**

(56) Entgegenhaltungen:
**DE-A- 2 264 853** **FR-A- 2 190 616**

EP 0 662 985 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Bei der Beschichtung von manchen Substraten mit geschäumten wäßrigen Präparaten, bei welchen es gewünscht ist, daß in der Beschichtung die Schaumstruktur erhalten bleibt, und die Präparate wäßrige Präparate sind, die ein härtbares Polymeres enthalten, kann der Schaum auf verschiedene Weise erzeugt werden, z.B. durch chemische Reaktion der Komponenten unter Abspaltung von gasförmigen Reaktionsprodukten oder durch Zugabe von geeigneten Blähmitteln, oder noch durch maschinelles Verschäumen des Präparates mit einem zugefügten inerten Gas, insbesondere mit Luft.

Da durch das maschinelle Verschäumen im allgemeinen feinere Schaumstrukturen erhältlich sind als mit in situ erzeugten Gasen, ist es - mindestens in denjenigen Fällen, in welchen die Feinheit der Schaumstruktur eine Rolle spielt - gewünscht, maschinell erzeugte Schäume einzusetzen. Bei den maschinell erzeugten Schäumen ist allerdings eine unerwünschte Erscheinung die Unbeständigkeit des erzeugten Schaumes, d.h. daß der Schaum z.B. beim Zwischenlagern sich mindestens teilweise durch Zerfall oder Absetzen verändert und/oder bei der Verwendung, insbesondere mit Spritzapparaten, seine Schaumstruktur größtenteils verliert, sodaß es praktisch unmöglich ist, den Schaum als solchen mit gängigen Spritzapparaturen (besonders mit Spritzpistolen) auf ein Substrat aufzutragen. Solche unbeständigen Schäume werden auch bei der Herstellung, beim Austritt aus den Verschäumungsmaschinen meist derart expandiert, daß auch dadurch ein Zerfall des Schaumes begünstigt wird.

Es wurde nun gefunden, daß unter Verwendung der unten angegebenen Komponenten sehr feine und beständige, wäßrige Schäume erhältlich sind, die sowohl beim Zwischenlagern als auch bei der Verarbeitung derart beständig sind, daß sie auch mit üblichen Spritzgeräten (insbesondere Spritzpistolen) in Form von Schaum appliziert werden können, und auch nach dem Trocknen die Schaumstruktur im wesentlichen erhalten bleibt.

Die Erfindung betrifft die unten definierten wäßrigen Schäume, deren Herstellung und Verwendung.

Ein erster Gegenstand der Erfindung ist also ein wäßriger, durch maschinelles Verschäumen eines entsprechenden wäßrigen Präparates (W) erzeugter, gießbarer und spritzbeständiger Schaum (S), worin die wäßrige Phase

(A) ein härtbares Polymersystem, welches aus

(U) einem ionomeren, Polyätherketten enthaltenden Polyurethan oder einem Gemisch solcher ionomerer Polyurethane

und gegebenenfalls

(P) einem oder mehreren weiteren, zusammen mit (U) härtbaren Polymeren,

besteht,
und (B) mindestens einen Schaumstabilisator

enthält, wobei (U) 30 bis 100 Gewichtsprozent von (A) ausmacht und das Litergewicht von (S) bei 20°C und Normaldruck im Bereich von 400 bis 700 g liegt, und wobei die Polyätherketten in (U) aus Makrodiolen stammen, welche Polyätherdiole sind.

Als Polyurethane (U) kommen im allgemeinen übliche ionomere Polyurethane in Betracht, insbesondere solche, die in Wasser dispergierbar sind, vornehmlich wie sie aus der Umsetzung von Dimethylolalkancarbonsäuren und Diolen, insbesondere Makrodiolen, mit Diisocyanaten und gegebenenfalls Diaminoverbindungen erhältlich sind.

Als Diisocyanate kommen im allgemeinen übliche Diisocyanate in Betracht, vorzugsweise solche, worin mindestens ein Teil aliphatisch ist, insbesondere aliphatische (offenkettige oder/und mindestens teilweise cycloaliphatische) oder/und aromatische Diisocyanate.

Die Diisocyanate enthalten im Kohlenwasserstoffrest, an welches die zwei Isocyanatgruppen gebunden sind, vorteilhaft 6 bis 15 Kohlenstoffatome.

Als aliphatische offenkettige Diisocyanate kommen z.B. Hexamethylendiisocyanat oder Trimethylhexylen-1,6-diisocyanat (insbesondere 2,2,4-Trimethylhexylen-1,6-diisocyanat und 2,4,4-Trimethylhexylen-1,6-diisocyanat) in Betracht. Als cyclische Diisocyanate kommen vornehmlich mono- und dicyclische Diisocyanate in Betracht, z.B. 2,4- oder 2,6-Toluylendiisocyanat, m-Phenylendiisocyanat, Xylylendiisocyanat, 4,4'-Diphenylmethandiisocyanat, 3,3'-Dimethyl-4,4'-diphenylmethandiisocyanat, Dicyclohexylmethan-4,4'-, -4,2'- oder -2,2'-diisocyanat, wobei jeder Cyclohexylrest gegebenenfalls noch eine Methylgruppe tragen kann, 1,3-Cyclohexylendiisocyanat, methylsubstituiertes 1,3-Cyclohexylendiisocyanat und Isophorondiisocyanat.

Unter den genannten Diisocyanaten sind die aliphatischen (offenkettigen und/oder cyclischen) bevorzugt.

Nach einer bevorzugten Ausführung der Erfindung werden offenkettige und cycloaliphatische Diisocyanate eingesetzt, wobei das Molverhältnis der cycloaliphatischen zu den nicht-cyclischen Diisocyanaten vorteilhaft im Bereich

von 0,8:1 bis 3,5:1, insbesondere 1:1 bis 3,2:1 liegt.

Als Makrodiole kommen im allgemeinen bekannte Polyätherdiole in Betracht, wie sie zur Herstellung von in Wasser dispergierbaren Polyurethanen eingesetzt werden, worunter Polyalkylenglykole bevorzugt sind, insbesondere Polypropylenglykole, Polybutylenglykole und gemischte Polypropylen- und -butylenglykole. Die Polybutylenglykole sind vornehmlich solche, die sauerstoffgebundene Butylen-1,2-, -1,3-, -2,3- oder -1,4-Gruppen enthalten. Polypropylenglykole und Polybutylenglykole, bzw. entsprechende gemischte Polyätherdiole, sind vornehmlich Anlagerungsprodukte der entsprechenden cyclischen Oxyde (besonders Oxirane oder Tetrahydrofuran) an Wasser oder Ausgangsdiole, welche insbesondere 2 bis 6 Kohlenstoffatome enthalten, z.B. Äthylenglykol, Propylenglykol, Butylenglykol, Neopentylglykol oder Hexamethylendiol. Bevorzugt sind Polypropylenglykole.

Das durchschnittliche Molekulargewicht $\overline{M}_w$ der Makrodiole liegt vorteilhaft im Bereich von 300 bis 5000. Durch geeignete Wahl der Diole können die Eigenschaften der Polyurethane beeinflußt werden. Eine bevorzugte Gruppe von Diolen sind niedrigermolekulare Makrodiole, besonders Polyätherdiole, mit einem durchschnittlichen Molekulargewicht $\overline{M}_w$ im Bereich von 500 bis 1800, insbesondere 800 bis 1500. Eine weitere bevorzugte Gruppe von Diolen sind höhermolekulare Makrodiole, besonders Polyätherdiole, mit einem durchschnittlichen Molekulargewicht $\overline{M}_w$ im Bereich von 1000 bis 5000, bevorzugt 1200 bis 4000, insbesondere 1500 bis 3500. Die Differenz zwischen den beiden Molekulargewichten ist vorteilhaft im Bereich von 200 bis 3000, vorzugsweise 400 bis 2200.

Bei der Verwendung von beiden Kategorien von Makrodiolen liegt das Gewichtsverhältnis der niedrigermolekularen zu den höhermolekularen vorteilhaft im Bereich von 1:0,4 bis 1:4, vorzugsweise im Bereich von 1:0,7 bis 1:3.

Als Dimethylolalkancarbonsäuren, die zur Herstellung der ionomeren Polyurethane eingesetzt werden können, kommen im allgemeinen bekannte Carbonsäuren in Betracht, wie sie als carboxygruppenhaltige Diole bei der Herstellung von ionomeren, carboxygruppenhaltigen Polyurethanen eingesetzt werden, insbesondere α,α-Dimethylolalkancarbonsäuren. Vornehmlich entsprechen sie der Formel

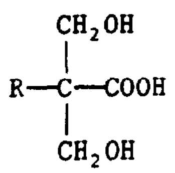

(I),

worin R Wasserstoff oder $C_{1-8}$-Alkyl bedeutet.

Vorzugsweise bedeutet R Wasserstoff oder $C_{1-4}$-Alkyl, insbesondere Wasserstoff oder Methyl.

Das Molverhältnis der gesamten nicht-ionogenen Diole, insbesondere Makrodiole, zum carboxygruppenhaltigen Diol liegt vorteilhaft im Bereich von 1:0,2 bis 1:2, vorzugsweise im Bereich von 1:0,3 bis 1:1,2.

Pro Mol der gesamthaft eingesetzten Diolverbindungen (Makrodiole und carboxygruppenhaltigen Diole) werden vorteilhaft 0,9 bis 3 Mol Isocyanatverbindungen eingesetzt. Wenn die Diole und Isocyanate zu isocyanatterminierten Oligourethanen umgesetzt werden, die dann mit Diaminoverbindungen ketten-verlängert werden, liegt das Molverhältnis der gesamten Diolverbindungen zu den Isocyanatverbindungen vorteilhaft im Bereich von 1:1,05 bis 1:2,5, vorzugsweise 1:1,2 bis 1:2,2. Die Polyaddition der Isocyanat- und Diolverbindungen kann auf an sich bekannte Weise stattfinden, z.B. in An- oder Abwesenheit von Lösungsmitteln (als Lösungsmittel kommen insbesondere organische aprotische Lösungsmittel in Betracht, z.B. Dialkylketone wie Methyläthylketon, Cyclohexanon oder aliphatische Carbonsäureester wie Essigsäureäthylester oder -äthoxyäthylester, die gegebenenfalls mit aromatischen Lösungsmitteln wie Toluol oder Xylol verschnitten sein können - vorzugsweise werden allerdings keine aromatischen Lösungsmittel eingesetzt), bei erhöhter Temperatur (z.B. im Temperaturbereich von 40°C bis Rückflußtemperatur) und gewünschtenfalls in Gegenwart von geeigneten Katalysatoren, wie Zinn-II-octoat oder Dibutylzinndilaurat. Vorzugsweise wird in Abwesenheit von jeglichen Lösungsmitteln und Katalysatoren verfahren. Die Temperatur wird vorteilhaft im Bereich von 70 bis 90°C, vorzugsweise 75 bis 85°C gehalten.

Die Umsetzung der Diisocyanate mit den Diolen ist zweckmäßig möglichst vollständig, wobei die Anwesenheit von höchstens 5 Val-%, vorzugsweise höchstens 2 Val-%, (bezogen auf die ursprünglich eingesetzten Diole) reaktionsfähiger, mit Isocyanat nicht umgesetzter, alkoholischer Hydroxygruppen kann dabei toleriert werden.

Vor einer allfälligen Kettenverlängerung der ionomeren Oligourethane oder Polyurethane mit Diaminoverbindungen können die Carboxygruppen gewünschtenfalls mindestens teilweise in eine Salzform übergeführt werden. Zur Salzbildung eignen sich übliche, insbesondere einwertige Kationen, z.B. Alkalimetallkationen ($Li^+$, $K^+$ oder vorzugsweise $Na^+$), disubstituiertes cyclisches Ammonium (z.B. Morpholinium) oder vorzugsweise trisubstituiertes Ammonium. Besonders vorteilhaft werden zur Salzbildung wasserlösliche Trialkylamine eingesetzt, worin die Alkylreste jeweils vorzugsweise 1 bis 4 Kohlenstoffatome enthalten. Unter den Trialkylaminen ist Triäthylamin besonders bevorzugt.

Vorteilhaft wird soviel Base zur Bildung des Kations, vorzugsweise soviel tertiäres Amin eingesetzt, daß mindestens 90 Val-% der Carboxygruppen im Präpolymeren in Salzform vorliegen, insbesondere soviel, daß höchstens 98 Val-% der titrierbaren Carboxygruppen in Salzform vorliegen. Besonders bevorzugt wird soviel Base, bzw. Trialkylamin, zugesetzt, daß der pH-Wert eines wäßrigen 30 %-igen Präparates des endgültigen Poly(harnstoff)urethanes (U) mindestens 7, vorteilhaft 7 bis 9, insbesondere 7 bis 8,5 beträgt.

Als Diaminoverbindungen für eine allfällige Kettenverlängerung eignen sich bekannte Diaminoverbindungen, vornehmlich aliphatische, gesättigte, offenkettige oder cyclische Diamine mit 2 bis 10 Kohlenstoffatomen im aliphatischen Rest oder auch Hydrazin; z.B. Cyclohexylendiamin, Isophorondiamin, Äthylendiamin, Propylen-1,2- oder -1,3-diamin, Hexamethylendiamin und 2,2,4- und/oder 2,4,4-Trimethylhexylen-1,6-diamin, worunter die niedrigermolekularen offenkettigen Diamine mit 2 bis 6 Kohlenstoffatomen, insbesondere Propylen-1,2- oder -1,3-diamin, und Isophorondiamin bevorzugt sind, oder auch Hydrazin, letzteres vorzugsweise als Hydrat eingesetzt.

Die Umsetzung der diisocyanatterminierten Oligourethane mit den Diaminoverbindungen erfolgt vorteilhaft in wäßrigem Medium, gegebenenfalls in Gegenwart von weiterem Diisocyanat. Die Diaminoverbindungen werden vorteilhaft in solchen Mengen eingesetzt, daß eine möglichst vollständige Umsetzung der vorhandenen Isocyanatgruppen erfolgt. Besonders bevorzugt wird die Kettenverlängerung mit der Diaminoverbindung so gesteuert, daß im Endprodukt praktisch keine Isocyanatgruppen mehr titrierbar sind und das Produkt primäre Aminogruppen aufweist oder vorzugsweise im Produkt auch keine primären Aminogruppen mehr titrierbar sind. Die Umsetzung mit der Diaminoverbindung erfolgt zweckmäßig in wäßrigem Medium wie oben beschrieben, vorteilhaft im Temperaturbereich von 10 bis 35°C. Die Kettenverlängerung erfolgt vorteilhaft bis zu 80 bis 99 % d.Th. vorzugsweise bis 88 bis 97 % d.Th.

Gewünschtenfalls kann zur Kettenverlängerung anstelle der Diaminoverbindung ein vorzugsweise einfaches Diol, z.B. ein $C_{2-6}$-Alkandiol wie oben genannt, verwendet werden oder es kann mit Diaminoverbindung und mit Diol kettenverlängert werden. Bevorzugt als (U) sind ionomere Polyharnstoffurethane die, wie oben beschrieben, aus Polyätherdiolen, Dimethylolcarbonsäuren der Formel (I), Diisocyanaten und Diaminoverbindungen erhältlich sind.

Die Polyurethane (U) weisen, nach der Fixierung auf dem Substrat durch thermische Behandlung (besonders nach dem Trocknen, wie unten beschrieben), den Charakter von elastomeren Polyurethanen auf.

Gewünschtenfalls können die ionomeren Polyurethane (U) mit anderen dispergierbaren oder dispergierten mindestens zusammen mit (U) härtbaren Polymeren (P) verschnitten werden. Als Härten wird hier im wesentlichen die durch das Trocknen des Schaumes auf dem Substrat erreichte, vor allem physikalische Fixierung bezeichnet. Als (P) eignen sich insbesondere dispergierbare oder dispergierte nicht-ionomere Poly(harnstoff)urethane, (Meth)acryl (co)polymere und/oder Butadien(co)polymere (z.B. Butadien/Acrylnitril). Als nicht-ionomere, dispergierbare Poly(harnstoff)urethane eignen sich vornehmlich bekannte Polyurethane, insbesondere solche die aus den oben genannten Makrodiolen, Diisocyanaten und gegebenenfalls Kettenverlängerern erhältlich sind, und vorteilhaft hydroxyterminiert oder/und aminoterminiert sind. Als (Meth)acryl(co)polymere eignen sich vornehmlich bekannte dispergierbare Produkte, insbesondere solche wie sie für die Ledergrundierung oder als Verschnittmittel für die Lederbeschichtung verwendet werden können, z.B. (Co)polymerisate von (Meth)acrylsäurealkylestern, worin die esterbildenden Alkylreste gegebenenfalls teilweise hydroxysubstituiert sind; die unsubstituierten Alkylreste enthalten beispielsweise 1 bis 12 Kohlenstoffatome, die hydroxysubstituierten enthalten beispielsweise 2 bis 4 Kohlenstoffatome; gegebenenfalls können einpolymerisierte nicht-ionogene Comonomeren vorhanden sein, z.B. Äthylen, Acrylnitril oder gegebenenfalls N-methyloliertes Acrylamid, und/oder anionische Comonomeren, z.B. (Meth)acrylsäure und/oder Itaconsäure. Gegebenenfalls können die (Meth)acryl(co)polymeren kleinere Anteile an eingebauten Alkylsiloxan-bzw. Silikonteilen enthalten.

Vorzugsweise werden in den zu verschäumenden Präparaten (W) bzw. in den erfindungsgemäßen Schäumen als (U) ionomere Polyharnstoffurethane eingesetzt, insbesondere solche wie oben beschrieben, vorzugsweise worin die Makrodiole Gemische aus höhermolekularen und niedrigermolekularen Makrodiolen sind und die aus der Kettenverlängerung von isocyanatterminierten Oligourethanen mit Diaminoverbindungen wie oben beschrieben hergestellt worden sind.

Wenn in (A) Polymere (P) vorhanden sind, beträgt deren Anteil vorteilhaft 5 bis 70, vorzugsweise 5 bis 60, insbesondere 10 bis 50 Gewichtsprozent von (A). Der Anteil an (U) in (A) beträgt 30 bis 100 Gewichtsprozent, vorzugsweise 40 bis 100 Gewichtsprozent, insbesondere 50 bis 100 Gewichtsprozent.

Als Schaumstabilisatoren (B) können bekannte Verbindungen eingesetzt werden, beispielsweise wasserlösliche Fettsäureamide, Kohlenwasserstoffsulfonate oder seifenartige Verbindungen (Fettsäuresalze) beispielsweise solche, worin der lipophile Rest 12 bis 24 Kohlenstoffatome enthält; insbesondere Alkansulfonate mit 12 bis 22 Kohlenstoffatomen im Kohlenwasserstoffrest, Alkylbenzolsulfonate mit 14 bis 24 Kohlenstoffatomen im gesamten Kohlenwasserstoffrest, oder Fettsäureamide oder seifenartige Fettsäuresalze von Fettsäuren mit 12 bis 24 Kohlenstoffatomen. Die wasserlöslichen Fettsäureamide sind vorzugsweise Fettsäureamide von Mono- oder Di-($C_{2-3}$-alkanol)-aminen. Die seifenartigen Fettsäuresalze können beispielsweise Alkalimetallsalze, Aminsalze oder unsubstituierte Ammoniumsalze sein. Als Fettsäuren kommen im allgemeinen bekannte Verbindungen in Betracht, beispielsweise Laurinsäure, Myristinsäure, Palmitinsäure, Ölsäure, Stearinsäure, Ricinolsäure, Behensäure oder Arachidinsäure, oder noch technische Fettsäuren z.B. Kokosfettsäure, Talgfettsäure, Sojafettsäure oder technische Ölsäure, sowie deren Hydrierungsprodukte. Besonders bevorzugt sind unsubstituierte Ammoniumsalze von höheren gesättigten Fettsäuren,

insbesondere von solchen mit 16 bis 24 Kohlenstoffatomen, vornehmlich der Stearinsäure und der hydrierten Talgfettsäure. Die Schaumstabilisatoren sind zweckmäßig solche, die sich weder unter Verschäumungsbedingungen noch unter Applikationsbedingungen zersetzen. Als Ammoniumsalze kommen zweckmäßig solche in Betracht, deren Zersetzungstemperatur ≥ 90°C, vorzugsweise ≥ 100°C ist. Die schwächer-anionischen Stabilisatoren ($B_1$), vornehmlich die carbonsauren Salze oder die Amide, können gewünschtenfalls mit stärker-anionischen Tensiden (B2) kombiniert werden, insbesondere mit den oben genannten Sulfonaten oder vorzugsweise mit Fettalkoholsulfaten, vorteilhaft in Form ihrer Salze (Alkalimetall- oder Ammoniumsalze wie oben genannt), z.B. im Gewichtsverhältnis ($B_1$)/($B_2$) im Bereich von 95/5 bis 50/50, vorteilhaft 85/15 bis 65/35.

Je nach bestimmtem Anwendungszweck der Schäume (S) können diese weitere Zusätze enthalten, vornehmlich

(C) mindestens einen Farbstoff,
(D) mindestens ein Verlaufmittel und/oder Netzmittel,
(E) mindestens ein Antiklebemittel ($E_1$) und/oder Weichmacher ($E_2$),
(F) mindestens ein Mattierungsmittel
und/oder (G) mindestens einen UV-Absorber oder/und mindestens ein Antioxydans.

Zweckmäßig sind die erfindungsgemäßen Schaumpräparate frei von Zusätzen hoher Dampfflüchtigkeit, die die Schaumzellen ungünstig beeinflussen, insbesondere von solchen Lösungsmitteln, die bei Applikationstemperatur oder unterhalb Applikationstemperatur stark dampfflüchtig sind oder sieden. Vorzugsweise wird auch von sonstigen Lösungsmitteln abgesehen. Die Anwesenheit geringer Anteile an nicht dampfflüchtigen Lösungsmitteln aus der Herstellung von (U) oder (P) kann zwar toleriert werden; deren Anteil sollte vorzugsweise 5 Gewichtsprozent insbesondere 2 Gewichtsprozent von (A) nicht übersteigen.

Als Farbstoffe (C) können beliebige geeignete Farbstoffe eingesetzt werden, wie sie für das Färben (besonders Pigmentieren) von Polyurethanen in der Masse eingesetzt werden, vornehmlich Dispersionsfarbstoffe oder besonders Pigmente, welche zweckmäßig mit Hilfe von Dispergatoren dispergiert sein können. Die Pigmente können mit üblichen Verdickungsmitteln angeteigt sein, z.B. mit solchen auf Basis gegebenenfalls modifizierter Kohlehydrate, z.B. modifizierter Cellulose (insbesondere Hydroxyäthyl- oder Hydroxymethylcellulose); von der Verwendung proteinartiger Verdickungsmittel (z.B. Kasein) wird vorteilhaft in den erfindungsgemäßen Schäumen (S) abgesehen, da diese einen negativen Einfluß auf das Schaumverhalten haben können. Der (C)-Gehalt in den Präparaten (W) ist beispielsweise ≤ 15 Gew.-% und kann je nach Farbstoff bzw. Pigment und je nach Substrat und gewünschtem Effekt variieren; es können bereits mit Pigmentgehalten ≤ 10 Gew.-%, insbesondere im Bereich von 0,1 bis 8 Gew.-%, sehr gute Farbeffekte erzielt werden. Gelegentlich können käufliche angeteigte wäßrige Pigmentpasten geringe Anteile an Entschäumern enthalten (z.B. ca. 5 Gew.-% oder weniger, bezogen auf Reinpigment); deren Anteil im Gesamtpräparat (W) bzw. (S) ist allerdings derart klein, daß sie keinen wesentlich störenden Einfluß auf (S) haben.

Als Verlauf- bzw. Netzmittel (D) eignen sich allgemein übliche Substanzen mit tensidem Charakter, besonders solche mit Netzmittel- oder Lösungsvermittlercharakter, wie sie in Polyurethanbeschichtungen einsetzbar sind, insbesondere z.B. aminofunktionelle Polysiloxane (keine Entschäumer), Perfluoralkyltenside (z.B. anionaktive, wie Phosphate, Sulfate und Carboxylate, oder nicht-ionogene, wie Alkanolamide) oder nicht-ionogene Lösungsvermittler [z.B. Mono- oder Diäthylenglykol-mono-($C_{1-6}$-alkyl)-äther, besonders -mono-($C_{3-4}$-alkyl)-äther]. Wenn solche Verlauf- bzw. Netzmittel eingesetzt werden, liegt deren Anteil, bezogen auf (W), vorteilhaft im Bereich von 0,05 bis 2 Gew.-%, vorzugsweise 0,1 bis 1 Gew.-%.

Als Antiklebemittel ($E_1$) können bekannte Produkte verwendet werden, beispielsweise Wachse, vorteilhaft mit einem Erweichungspunkt im Bereich von 45 bis 130°C, vorzugsweise 48 bis 105°C (z.B. Mineralwachse, Synthesewachse oder/und Esterwachse, wie Montanwachs, Carnaubawachs, Ozokerit oder Bienenwachs), Fette und Öle (z. B. über 250°C siedende Mineralöle) oder gegebenenfalls modifizierte tierische oder vegetabile Fette oder Öle oder noch entsprechende Surrogate (synthetische Öle) oder (nicht entschäumende) Polysiloxane, worunter die Öle bevorzugt sind. Diese Wachse, Fette, Öle und Polysiloxane können gegebenenfalls mit geeigneten Emulgatoren, z.B. nicht-ionogenen Emulgatoren, insbesondere Sorbitanmonoester von höheren Fettsäuren, wie Sorbitan-monooleat oder -monostearat, oxäthylierten Fettalkoholen, oxäthylierten Alkylphenolen und/oder oxäthylierten Sorbitanmono- oder -diestern von höheren Fettsäuren, und/oder (besonders die Fette oder Öle) durch Sulfierung dispergiert sein; die Fettsäuren und Fettalkohole enthalten vorteilhaft 12 bis 24 Kohlenstoffatome, die alkylierten Phenole enthalten vornehmlich 1 oder 2 Alkylreste mit je 3 bis 12, vorzugsweise 4 bis 9 kohlenstoffatomen; der Oxäthylierungsgrad beträgt vorteilhaft soviel, daß das Tensid hydrophilen bzw. 0/W-Emulgator-Charakter aufweist. Gegebenenfalls können auch anionaktive Tenside eingesetzt werden, insbesondere Carboxymethylierungsprodukte oder Sulfatierungsprodukte der genannten nicht-ionogenen Tenside oder gegebenenfalls der nicht-oxäthylierten Edukte.

Gegebenenfalls können den Polyurethanen auch Weichmacher ($E_2$) zugegeben werden, z.B. solche wie in A.K. Doolittle "The Technology of Solvents and Plasticizers" edited by J. Wiley and Sons Ltd., unter der Bezeichnung

"Plasticizers" und insbesondere "Softeners", insbesondere im Kapitel 16, oder in Dr. E. Karsten "Lackrohstoff-Tabellen", 7. Aufl., Curt R. Vincentz Verlag, unter der Bezeichnung "Weichmacher" im Kap. 34 definiert und beschrieben. Vornehmlich können als Weichmacher Ester mehrbasischer Säuren (Phthalsäure, Adipinsäure oder Sebacinsäure) von gegebenenfalls oxalkylierten aliphatischen Alkoholen (z.B. mit 1 bis 20 Kohlenstoffatomen), ($C_{1-12}$-Alkyl)-phenolen oder Benzylalkohol, oder Alkylester epoxydierter Fettsäuren (z.B. von technischen ungesättigten Fettsäuren mit 16 bis 22 Kohlenstoffatomen) genannt werden. Die genannten Weichmacher und Antiklebemittel können in üblichen Konzentrationen den Polyurethanen zugegeben werden, z.B. in Mengen von 1 bis 50, vorzugsweise 2 bis 30 Gewichtsprozent des eingesetzten Polyurethans (U), insbesondere Polyharnstoffurethans.

Pro 100 Gewichtsteile (A) werden vorteilhaft 0 bis 20, vorzugsweise 2 bis 15 Gewichtsteile (E) eingesetzt.

Als Mattierungsmittel (F) kommen im allgemeinen übliche Substanzen in Betracht, besonders solcher Art und in solchen Mengen, wie sie für die Mattierung und Pigmentierung von Kunststoffen, insbesondere Polyurethan-Kunststoffen eingesetzt werden. Als Mattierungsmittel kommen beispielsweise Wachse oder silikathaltige Substanzen in Betracht, beispielsweise Mikrowachse, fette Tone, amorphe Kieselsäure und Kaolin. Diese werden zweckmäßig in ein Bindemittel eingearbeitet, vorzugsweise in ein Polyurethan, (z.B. in einer Colloidmühle) als Stammkonzentrat ("master batch") und in dieser Form eingesetzt.

Als UV-Absorber und/oder Antioxidantien (G) können übliche Substanzen verwendet werden. Diese können in den jeweiligen Polymeren bereits enthalten sein. Bevorzugt werden keine UV-Absorber und/oder Antioxidantien (G) den Präparaten (W) zugesetzt.

Nach einem weiteren Aspekt der Erfindung können den erfindungsgemäßen Präparaten Vernetzungsmittel zugesetzt werden, z.B. Polyisocyanate oder Polyaziridine, in geeigneten Mengen zur jeweiligen (Teil)vernetzung. Darunter sind insbesondere die N-substituierten Polyaziridine hervorzuheben, insbesondere 1,1,1-Tri-[β-(äthylenaziridino)-propionyloxy]-propan. Durch die Vernetzung mit den genannten mehrwertigen Vernetzungsmitteln kann die Weichheit, die Dehnbarkeit und das Rückstellvermögen der Ausrüstungen gewünschtenfalls modifiziert werden. Vorzugsweise werden keine Vernetzungsmittel zugegeben.

Durch geeignete Wahl der Art und Menge der Komponenten können die Eigenschaften von (S) beeinflußt werden, sei es in Bezug auf das zu beschichtende Substrat, sei es auf die physikalischen Eigenschaften des Schaumes oder/und der damit erzeugten Beschichtung.

Durch Zugabe von Ölen oder Wachsen, besonders von Paraffinwachsen, z.B. unter den Komponenten (E) oder (F), kann z.B. einer eventuellen Rißbildung beim Trocknen unter aerodynamischer Beanspruchung der Schaumoberfläche (z.B. beim Belüften im Trockenkanal) oder auch bei relativ hohen Temperaturen, z.B. zwischen 65 und 80°C, entgegengewirkt werden. Dafür genügen z.B. Konzentrationen ≤ 6 Gew.-% bezogen auf (W).

Die erfindungsgemäßen Schäume (S) werden zweckmäßig durch maschinelles Verschäumen entsprechender wäßriger Präparationen (W) hergestellt, die die erforderlichen Komponenten (A) und (B), und gegebenenfalls die weiteren Zusätze [(C), (D), (E), (F) und/oder (G) und/oder gegebenenfalls weitere geeignete Zusätze wie oben genannt] enthalten.

Die zu verschäumenden Präparate (W) können vorteilhaft durch einfaches Mischen der jeweiligen Komponenten hergestellt werden, wobei die jeweiligen Komponenten vorzugsweise direkt in Form von wäßrigen Präparaten eingesetzt werden, wie sie aus der Herstellung und/oder Formulierung entstehen, und nach dem Vermischen der Wirksubstanzen kann der Wassergehalt erforderlichenfalls korrigiert werden. Die Polymeren (U) und (P) können beispielsweise in Form von wäßrigen, konzentrierten Präparaten eingesetzt werden, die jeweils einen Trockenstoffgehalt z.B. von 10 bis 60 Gewichtsprozent, vorzugsweise 12 bis 50 Gewichtsprozent, aufweisen (je nach Wasserdispergierbarkeit der jeweiligen Polymeren).

Der Schaumstabilisator (B) wird zweckmäßig in einer wirksamen Menge eingesetzt, welche so zu wählen ist, daß in der gewünschten Zeit und bei der gewünschten Schaumfeinheit und -festigkeit in Zusammenhang mit (A) die gewünschte Stabilität erreicht wird. Je nach Art der Komponenten und deren Gehalt in (W) kann die wirksame bzw. optimale Konzentration an (B) variieren und im allgemeinen in einem breiten Bereich schwanken, z.B. bei Konzentrationen ≤ 15 Gew.-% (B); je nach (U) und gegebenenfalls (P), kann z.B. bereits bei Konzentrationen von 0,1 Gew.-% oder 0,2 Gew.-% (B) ein relativ stabiler Schaum entstehen. Vorteilhaft werden 2 bis 15 Gew.-% (B) insgesamt in (W) eingesetzt. Es können aber auch mit kleineren Mengen (B) noch wirksame Schäume erhalten werden, z.B. mit 1 bis 8 Gew.-% (B), insbesondere auch mit ≤ 5 Gew.-% (B) bezogen auf die Gesamtmenge des Präparates (W).

Die Eignung von (W), in einem bestimmten Schaumschläger in der gewünschten Feinheit zu einem Schaum (S) geschlagen zu werden, kann außer durch die Beschaffenheit des Schaumschlägers auch durch die Viskosität (besonders die Fordbecher-Viskosität) von (W) gesteuert werden. Vorteilhaft beträgt die Fordbecher-Viskosität von (W), gemessen im Fordbecher Nr. 4, 18 bis 50, vornehmlich 18 bis 35 Sekunden, vorzugsweise 20 bis 32 Sekunden, besonders bevorzugt 25 bis 30 Sekunden. Ist die Fordbecher-Viskosität höher als der gewünschte Wert, kann das Präparat entsprechend mit Wasser [vorzugsweise nicht mehr als 5 % Wasser bezogen auf die Gesamtmenge (W)] verdünnt werden; ist die Viskosität zu niedrig, dann kann das Präparat durch Zugabe eines geeigneten Verdickers, z. B. auf Polyurethan-, Polyamid- oder Caseinbasis, auf die oben genannte Viskosität eingestellt werden.

Das Verschäumen von (W) kann in handelsüblichen geeigneten Schaumschlägern erfolgen, zweckmäßig in einem solchen, der so konstruiert ist und betrieben wird, daß eine möglichst dichte, gleichmäßige und feine Wirbelbildung beim Mischen stattfindet und folglich eine entsprechend feine Verteilung der Luft in (W) erfolgt und die gewünschte Schaumfeinheit erzielt wird. Ein möglichst geringer Druckabfall beim Austritt aus dem Schaumschläger begünstigt die Feinheit des Schaumes.

Die erfindungsgemäßen Schäume (S) weisen bei 20°C und Normaldruck vorteilhaft ein Litergewicht im Bereich von 480 bis 700 g, z.B. 480 bis 680 g, vorzugsweise 480 bis 640 g, besonders bevorzugt 500 bis 600 g, auf.

Die erfindungsgemäßen Schäume (S) weisen vorteilhaft eine Schaumzellengröße auf, die im wesentlichen kleiner ist als 500 um und beispielsweise im Bereich von 0,1 bis 200 µm, besonders 0,2 bis 100 um, liegt, wobei gelegentlich einzelne Schaumbläschen durch Zusammenfließen auch größer sein können, z.B. in Bereich von 200 bis 1000 um oder auch nur 100 bis 500 um.

Die erfindungsgemäßen Schäume (S) sind derart beständig, daß sie auch nach mehrstündigem Zwischenlagern ihre Schaumstruktur im wesentlichen beibehalten und sind auch - gegebenenfalls unter geringem Überdruck (beispielsweise $\geq$ 0,1 bar, z.B 0,1 bis 1 bar) - einwandfrei gießbar. Die Beständigkeit der erfindungsgemäßen Schäume (S) kann auch an Hand des Gießkegels erkannt werden, d.h. an der kegelförmigen Vertiefung, die sich beim Gießen des Schaumes (S) durch eine runde, rohrförmige Öffnung auf eine Schaumdecke des gleichen Schaumes (S), in dieser Schaumdecke bildet. Vorteilhaft sind die erfindungsgemäßen Schäume (S) so stabil, daß sie beim kontinuierlichen Gießen des Schaumes unter einem Überdruck von 0,6 bar durch eine runde Rohröffnung von 1 cm Durchmesser aus einer Höhe von 10 cm auf eine Schaumdecke von mindestens 20 cm Stärke des gleichen Schaumes (S), in dieser eine kegelförmige Vertiefung von mindestens 0,3 cm, vorteilhaft 0,4 bis 2 cm, vorzugsweise 0,5 bis 1,5 cm Tiefe während des Gießens bilden, welche sich nach Abstellen des Gießstrahles vorzugsweise innerhalb von höchstens 5 Sekunden, z.B. innerhalb von 0,2 bis 5 Sekunden, - makroskopisch betrachtet - wieder ebnet. Der Schaum (S) läßt sich durch eine Rohröffnung von 0,5 bis 3, insbesondere 0,6 bis 2 cm Durchmesser unter Einwirkung eines Überdruckes im Bereich von 0,1 bis 1 bar fließend und ohne Unterbrechung gießen.

Zur Verschäumung der wäßrigen Präparate (W) zu den erfindungsgemäßen Schäumen (S) eignen sich besonders Mischer (M), die fähig sind einen entsprechend feinen Schaum zu erzeugen, insbesondere Coaxiale Rotor/Stator-Mischer, in welchen der mit dem Rotor verbundene zylinderförmige innere Teil des Mischerkopfes ("Quirl") mit radial fest angebrachten (vorzugsweise kantigen) Stiften an der Zylinderwand besetzt ist, und der mit dem Stator verbundene zylinderförmige Teil des Mischerkopfes ("Behälter") ebenfalls mit radial fest angebrachten (vorzugsweise kantigen) Stiften an der Innenwand besetzt ist, so daß beim Betrieb des Mischers die Rotorstifte in den Statorstiften kämmen und, unter Zuspeisung von (W) und Luft an einem Ende des Mischerkopfes, im Mischerkopf eine wirksame Verschäumung erfolgt und am anderen Ende des Mischerkopfes ein im wesentlichen nicht expandierter Schaum (S) austritt. Durch die Wahl der Länge, Dichte un Form der Stifte, im Zusammenhang mit der vorgesehenen Drehgeschwindigkeit, dem Volumen des Mischers, der Zuspeisegeschwindigkeit des wäßrigen Präparates (W) und dem Druck der Zugespeisten Luft, kann eine optimale Feinverschäumung der Präparate (W) zu stabilen, spritzbeständigen Schäumen (S) erfolgen. Durch geeignete Wahl der Parameter im Zusammenhang mit der Wahl von (W) kann unter minimalem Luftüberdruck ein optimaler Schaum (S) erzeugt werden, z.B. bei einem Überdruck bis 5 bar, vorzugsweise im Bereich von 0,1 bis 1,5, besonders 0,2 bis 0,9 bar.

Der auf diese Weise, besonders bei einem Luftüberdruck < 1 bar, erzeugte erfindungsgemäße Schaum (S) tritt praktisch ohne Entspannung aus dem Mischer aus, da der geringe Luftüberdruck beim Verschäumen selbst größtenteils ausgeglichen wird und, soweit noch ein geringer Überdruck in den Schaumzellen vorhanden sein sollte, dieser durch die hohe Festigkeit der Schaumzellenstruktur nicht zu unerwünschten Schaumveränderungserscheinungen führt.

Die erfindungsgemäßen wäßrigen Schäume (S) eignen sich zur Herstellung solcher Beschichtungen, wie sie aus den jeweiligen ionomeren Polyurethanen (U) herstellbar sind, insbesondere zur Herstellung von thermoplastischen, geschäumten Beschichtungen. Als Substrate für die Beschichtungen eignen sich im allgemeinen beliebige übliche, harte oder dehnbare und/oder flexible Substrate. Als harte Substrate können z.B. Stein und steinähnliche Materialien, Metall, Holz und Kunstoffe erwähnt werden. Als flexible und/oder dehnbare Substrate können z.B. Textilmaterial (z.B. Gewebe, Gewirke, Vliesstoffe oder Filz, oder noch - zur Beschichtung der Rückseite - auch Teppiche und Velours), Papier, Preßspan, Pappe, Kunststoff und Leder erwähnt werden. Da die erfindungsgemäßen Schäume (S) Beschichtungen mit einer besonders ausgeprägten Dehnbarkeit und Biegsamkeit und einem besonders ausgeprägten Rückstellvermögen geben können, sind sie für Beschichtungen auf flexiblen und/oder dehnbaren Substraten besonders gut geeignet und daher dafür auch besonders bevorzugt. Bevorzugt sind sie vor allem für Substrate, an die besonders hohe Anforderungen im Bezug auf Flexibilität, Dehnbarkeit, und Rückstellvermögen gestellt werden, z.B. Kunstleder und insbesondere gegerbtes Leder (beispielsweise für Polstermöbel, Schuhwerk, Bekleidung, Koffer, Taschen und Modeaccessoires). Die Leder können beliebig gegerbt sein und gegebenenfalls gefärbt und/oder gefettet sein.

Die Applikation kann auf sehr einfache Weise unter Verwendung von an sich für das Auftragen von Schaum

üblichen Applikationsmethoden erfolgen, z.B. durch Rakeln oder Beschichten mit einer Walze, oder vornehmlich durch Spritzen mit geeigneten an sich üblichen Spritzpistolen, z.B. mit solchen ohne oder mit Luftzufuhr, z.B. mit sogenannten Airless oder Air-mix Spritzpistolen oder vorzugsweise mit Niederdruckpistolen (insbesondere mit sogenannten HVLP - High Volume Low Pressure - Pistolen). Hierzu sei bemerkt, daß in den Spritzpistolen mit Luftzufuhr die Luft im wesentlichen nur zur Schaumbeförderung dient und es ist überraschend, daß bei der Schaumbeförderung in Spritzpistolen sowohl mit als auch ohne Luftzufuhr (besonders solchen der genannten Art) die Schaumstruktur von (S) beim Spritzen insoweit erhalten bleibt als er in Form von gleichartigem Schaum auf das Substrat aufgetragen wird und darauf als Schaum fixiert werden kann. Besonders geeignet ist die Applikation durch Spritzen oder mit einem Rollrakel ("roller coater").

Für die Applikation des erfindungsgemäßen Schaumes (S) mit Niederdruckpistolen, besonders mit HVLP-Pistolen, eignet sich zum Beispiel eine Düse/Nadel von 1 bis 2,5 mm, vorzugsweise 1,5 bis 2 mm. Das Spritzverfahren mit der HVLP-Pistole mit Verwendung des erfindungsgemäßen Schaumes (S) zeichnet sich durch eine geringere Vernebelung (Spritzverlust) gegenüber dem Airless- oder Airmix-Verfahren aus. Bei der Verwendung von Airless oder Airmix Pistolen eignen sich beispielsweise Düsen mit einer Bohrung von 0,1 bis 1 mm, vorzugsweise 0,3 bis 0,6 mm. Bei der Applikation mit einem Rollrakel ("roller coater") ist darauf zu achten, daß der Rollrakel für die Schaumapplikation eingerichtet sei, d.h. mit einem Hartrakel und einer Vorrichtung für die exakte Einstellung des Rakelabstandes (Mikrofeineinstellung), ausgerüstet ist, um Schaumfilme unterschiedlicher Dicke gleichmäßig auf die Walze zu bringen. Der Rakelabstand von der Walze kann beispielsweise im Bereich von 0,1 bis 0,4 mm, bevorzugt 0,15 bis 0,22 mm, liegen. Bei der Applikation mit dem Rollrakel ist es wesentlich, daß der Schaum kontinuierlich zugeführt wird, was über einen Zulaufverteiler gesteuert werden kann und mit dem erfindungsgemäßen gut gießbaren Schaum (S) sehr gut möglich ist.

Die erfindungsgemäßen Schäume (S) werden vorteilhaft in solchen Mengen aufgetragen, daß die Auftragsmenge von (A), insbesondere auf Leder, im Bereich von 5 bis 70 g/$m^2$, vorzugsweise im Bereich von 7 bis 60 g/$m^2$ liegt. Auf den Schaum bezogen liegt die (S)-Auftragsmenge, insbesondere auf Leder, vorteilhaft im Bereich von 50 bis 300, vornehmlich 80 bis 300, z.B. 80 bis 280, vorzugweise 80 bis 250 g/$m^2$. Die bevorzugten Auftragsmengen können je nach Substrat variieren, so z.B. für Spaltzurichtung bevorzugt 200 bis 250 g (S)/$m^2$, für geschliffenes Leder 100 bis 150 g (S)/$m^2$ und für vollnarbiges Leder 80 bis 120 g (S)/$m^2$. Auch je nach Applikationstechnik können die optimalen Bereiche leicht schwanken; so werden z.B. mit HVLP-Pistolen Auftragsmengen von 80 bis 200 g/$m^2$ bevorzugt, während mit Airless und Air-mix Pistolen Auftragsmengen im Bereich von 120 bis 250 g/$m^2$ bevorzugt werden. Bei der Applikation mit dem Rollrakel können Schaumfilme einer sehr gleichmäßigen Höhe erzielt werden.

Gegebenenfalls können die Ledersubstrate mit einem Vorgrund vorbeschichtet sein, z.B., je nach Substrat und/oder gewünschtem Effekt, als Haftstrich, Imprägnierstrich oder einfache Vorgrundierung. Für den Vorgrund können übliche, vorzugsweise wasserhaltige Präparate eingesetzt werden, die mindestens ein entsprechendes Polymeres enthalten, z.B. ein gegebenenfalls ionomeres Poly(harnstoff)urethan, ein (Co)polyacrylat oder/und ein (Co)polybutadien. Für den Haftstrich werden vorzugsweise Polyurethane eingesetzt, welche vorzugsweise hydroxyterminierte Polyurethane sind, die aus Polyesterpolyolen, kurzkettigen Diolen und aromatischen und gegebenenfalls aliphatischen Diisocyanaten zusammengesetzt sind. Diese Vorgrundpräparate können auf an sich übliche Weise auf das Substrat aufgetragen und getrocknet werden.

Die mit dem erfindungsgemäßen Schaum (S) ausgerüsteten Substrate, insbesondere Leder, können auf an sich übliche Weise getrocknet werden - zweckmäßig im Trockenkanal. Für die Trocknung von mit dem erfindungsgemäßen Schaum (S) beschichtetem Leder eignen sich besonders Temperaturen ≤ 80°C, vorzugsweise im Bereich von 55 bis 75°C im Trockenkanal, wobei die geeignete Länge des Trockenkanals je nach Lederart variieren kann (z.B. von 10 bis 20 m, mit Rücklauf auch nur 10 bis 15 m). Die getrocknete Schicht kann gewünschtenfalls unmittelbar gebügelt oder/und geprägt werden. Beim Bügeln können z.B. Temperaturen ≤ 75°C, vorteilhaft 40 bis 70°C, insbesondere im Bereich von 50 bis 70°C, beim Prägen ≤ 95°C, vorteilhaft 50 bis 90°C, insbesondere im Bereich von 50 bis 75°C, verwendet werden. Der Druck kann an sich beliebig sein z.B. bis 260 bar, vornehmlich ≤ 250 bar.

Die erfindungsgemäßen Ausrüstungen mit dem Schaum (S) sind vorzugsweise solche, die einem Massestrich entsprechen und können auch mehrfach wiederholt werden; es können z.B. zwei oder auch drei aufeinanderfolgende Beschichtungen mit (S) erfolgen. Im allgemeinen genügt ein einziger Auftrag oder auch, je nach gewünschtem Effekt und Ledersubstrat, zwei Aufträge mit dem Schaum (S).

Die erfindungsgemäßen Beschichtungen sind aber auch mit sonstigen Beschichtungen verträglich, zweckmäßig solchen, die die Schaumstruktur im wesentlichen nicht beeinträchtigen, insbesondere solchen auf wäßriger Basis, die geschäumt oder nicht geschäumt sein können. Für besondere Farbeffekte kann z.B. ein Farbauftrag mit einer wäßrigen nicht-geschäumten Dispersion vorgenommen werden, welche ein Pigment und einen Binder in dispergierter Form enthält. Dafür eignen sich im allgemeinen auch an sich bekannte Farbauftragpräparate. Als Pigmente können z.B. die oben unter (C) genannten eingesetzt werden. Als Binder kommen z.B. als solche bekannte Polymeren in Betracht, z.B. solche wie oben als "Verdickungsmittel" genannt oder auch wie unten für die Abschlußzurichtung erwähnt. Die Applikation dieser Farbansätze erfolgt vorteilhaft durch Überspritzen, z.B. durch ein- oder zweimaliges Überspritzen, des getrockneten mit (S) beschichteten Materials.

Vorteilhaft werden die mit (S) und gegebenenfalls mit mindestens einem Zwischenauftrag (z.B. einem zusätzlichen Farbauftrag) beschichteten Substrate mit mindestens einem Schlußauftrag beschichtet. Die Abschlußbeschichtung kann auf an sich übliche Weise auf die getrocknete vorhergehende Beschichtung und unter Verwendung üblicher Produkte erfolgen.

Es können beispielsweise Abschlußzurichtungen (insbesondere Abschlußlacke) auf Caseinbasis, auf Celluloseacetobutyratbasis, auf Polyurethanbasis, auf Nitrocellulosebasis oder auf Epoxyharzbasis verwendet werden (worunter diejenigen auf Polyurethanbasis, auf Nitrocellulosebasis und auf Epoxyharzbasis bevorzugt sind), z.B. klare, mattierte oder/und farbstoffhaltige (besonders pigmenthaltige), je nach gewünschtem Effekt. Die Abschlußbeschichtung kann auf übliche Weise (z.B. im Trockenkanal) getrocknet werden, und schließlich - je nach gewünschtem Warenbild - z.B. gebügelt, geprägt und/oder gewalkt werden. Durch die erfindungsgemäße feine Schaumzurichtung können besonders schöne Prägebilder erzielt werden.

Für das abschließende Bügeln und/oder Prägen können auch etwas höhere Temperaturen, z.B. 60 bis 120°C, verwendet werden; die Drucke können in beliebigen üblichen Bereichen schwanken, z.B. zwischen 60 und 260 bar.

Analog wie oben für das Leder beschrieben, können auch andere Substrate beschichtet werden z.B. Kunstleder oder sonstige der oben genannten Materialien.

Erfindungsgemäß können sehr haft- und reißfeste geschäumte Beschichtungen hoher Deckkraft und Echtheit erzeugt werden, die sich durch eine hervorragende Flexibilität und Dehnbarkeit sowie durch ein besonders gutes Rückstellvermögen auszeichnen. Durch die erfindungsgemäße Beschichtung mit den geschäumten Präparaten (S) können mit geringeren Mengen an Grundierungspräparat als mit bisherigen nicht-geschäumten Grundierungspräparaten optimale Grundierungen bei geringerer Gewichtsbelastung des Substrates und mit entsprechender Energieeinsparung beim Trocknen, erhalten werden. Sie eignen sich - gegebenenfalls nach zwischengeschaltetem, geschäumtem oder nicht-geschäumtem Farbauftrag - als Grundierung für beliebige Abschlußlacke, z.B. auf Basis von Nitrocellulose, Poly(harnstoff)urethan, Epoxyharz, Celluloseacetobutyrat oder Casein, besonders wie oben erwähnt. Die unter Einsatz der erfindungsgemäßen Schaumgrundierungen hergestellten Beschichtungen, besonders Lederzurichtungen, zeichnen sich durch ihre Fülle und ihre Weichheit sowie durch eine überraschend gute Prägbarkeit aus.

In den folgenden Beispielen bedeuten die Teile Gewichtsteile und die Prozente Gewichtsprozente; die Temperaturen sind in Celsiusgraden angegeben. Das eingesetzte Trimethylhexamethylendiisocyanat ist ein Isomerengemisch aus gleichen Teilen 2,2,4- und 2,4,4-Trimethylhexamethylendiisocyanat-1,6. "F.C." steht für "Ford Cup" (d.h. "Fordbecher"). "C.I." steht für "Colour Index". Der in (L2), (L3) und (L6) eingesetzte organisch verdünnbare Nitrocelluloselack ist eine Nitrocellulose, die in einem organischen Lösungsmittelsystem [30 Teile Butylacetat, 15 Teile Methyläthylketon, 25 Teile Xylol, 15 Teile $C_{2-4}$-Alkohole und 15 Teile Hochsieder (Butylglykolacetat)] gelöst ist. Es werden die folgenden Präparate und Produkte eingesetzt:

<u>Vorgrundierungspräparate (V1) bis (V4)</u>

| (V1) Wäßrige Polyacryldispersion enthaltend | |
|---|---|
| 20 % | Polyacrylatimprägnierbinder (17 % Polyacrylsäureester aus 6 Teilen Acrylsäure, 52 Teilen Butylacrylat und 38 Teilen Äthylacrylat, und 3 % Alkylbenzolsulfonat), |
| 20 % | Butylglykol, |
| 60 % | Wasser. |

| (V2) Wäßrige Polyurethandispersion enthaltend | |
|---|---|
| 22 % | Polyharnstoffurethan aus 1 Mol Polypropylenglykol $\overline{M}_w$ 2000, 2,1 Mol Toluylendiisocyanat und 0,95 Mol Äthylendiamin, |
| 13 % | Butylglykol, |
| 65 % | Wasser. |

| (V3) Wäßrige Polyurethandispersion enthaltend | |
|---|---|
| 22 % | Polyurethan aus 1 Mol Polypropylenglykol $\overline{M}_w$ 2000, 2,3 Mol Toluylendiisocyanat, 0,45 Mol Triäthylamin und 0,5 Mol Dimethylolpropionsäure, |
| 78 % | Wasser. |

| (V4) Wäßrige Polyurethandispersion enthaltend | |
|---|---|
| 22 % | Polyurethan aus 0,5 Mol Polypropylenglykol $\overline{M}$w 1000, 0,5 Mol Polypropylenglykol $\overline{M}$w 2000, 2,3 Mol Toluylendiisocyanat, 0,45 Mol Triäthylamin und 0,5 Mol Dimethylolpropionsäure, |
| 78 % | Wasser. |

Polyurethane (U1) bis (U3)

(U1) Polyharnstoffurethan aus der Kettenverlängerung des Oligourethans aus 0,6 Mol Polypropylenglykol $\overline{M}_w$ 1000, 0,4 Mol Polypropylenglykol $\overline{M}_w$ 2000, 1,8 Mol Isophorondiisocyanat, 0,3 Mol Trimethylhexamethylendiisocyanat, 0,6 Mol 1,1-Dimethylolpropionsäure und 0,56 Mol Triäthylamin mit 0,93 Mol Hydrazinhydrat.

(U2) Polyharnstoffurethan aus der Kettenverlängerung des Oligourethans aus 0,8 Mol Polypropylenglykol $\overline{M}_w$ 2000, 0,2 Mol Polypropylenglykol $\overline{M}_w$ 1000, 2,2 Mol Isophorondiisocyanat, 0,6 Mol 1,1-Dimethylolpropionsäure und 0,58 Mol Triäthylamin mit 0,94 Mol Hydrazinhydrat.

(U3) Polyharnstoffurethan aus der Kettenverlängerung des Oligourethans aus 0,8 Mol Polypropylenglykol $\overline{M}_w$ 2000, 0,2 Mol Polypropylenglykol $\overline{M}_w$ 1000, 2,2 Mol Isophorondiisocyanat, 0,6 Mol 1,1-Dimethylolpropionsäure und 0,59 Mol Triäthylamin mit 0,95 Mol Propylen-1,2-diamin.

Acrylpolymere (P1) bis (P4)

| (P1) 39 %-ige wäßrige Dispersion eines Acrylpolymeren aus | |
|---|---|
| 15 | % Äthylacrylat |
| 22 | % Butylacrylat |
| 2 % | Acrylsäure. |

| (P2) 39 %-ige wäßrige Dispersion eines Acrylpolymeren aus | |
|---|---|
| 19 % | 2-Äthylhexylacrylat |
| 18 % | Butylacrylat |
| 2 % | Acrylsäure. |

| (P3) 39 %-ige wäßrige Dispersion eines Acrylpolymeren aus | |
|---|---|
| 30 % | Butylacrylat |
| 7 % | Acrylnitril |
| 2 % | Acrylsäure. |

| (P4) 41,2 %-ige wäßrige Dispersion eines Acrylpolymeren aus | |
|---|---|
| 25 % | Butylacrylat |
| 14 % | Acrylnitril |
| 1,2 % | Methacrylamid |
| 2 % | Acrylsäure. |

Verlaufmittel

(D1) "Fluorad FC 170 C" der Firma 3M (fluoriertes Alkylpolyoxyäthylenäthanol 95 %-ig, 5 % Wasser).

Polyurethanpräparate (A1) bis (A9)

(A1) Wäßrige 30 %-ige Dispersion eines Gemisches aus 56 Teilen (U1) und 44 Teilen (U2).

(A2) 32 %-ige wäßrige Dispersion eines Gemisches aus 56 Teilen (U1) (eingesetzt als 30 %-ige wäßrige Dispersion) und 44 Teilen Acrylpolymer Aktivsubstanz von (P1) [eingesetzt als wäßrige Dispersion (P1)].

(A3) 32 %-ige wäßrige Dispersion eines Gemisches aus 56 Teilen (U1) (eingesetzt als 30 %-ige wäßrige Dispersion) und 44 Teilen Acrylpolymer Aktivsubstanz von (P2) [eingesetzt als wäßrige Dispersion (P2)].

(A4) 32 %-ige wäßrige Dispersion eines Gemisches aus 56 Teilen (U1) (eingesetzt als 30 %-ige wäßrige Dispersion) und 44 Teilen Acrylpolymer Aktivsubstanz von (P3) [eingesetzt als wäßrige Dispersion (P3)j.

(A5) 32 %-ige wäßrige Dispersion eines Gemisches aus 56 Teilen (U1) (eingesetzt als 30 %-ige wäßrige Dispersion) und 44 Teilen Acrylpolymer Aktivsubstanz von (P4) [eingesetzt als wäßrige Dispersion (P4)].

(A6) 36 %-ige wäßrige Dispersion eines Gemisches aus 40 Teilen (U1) und 32 Teilen (U3).

(A7) 41 %-ige wäßrige Dispersion von (U1).

(A8) 32 %-ige wäßrige Dispersion von (U2) mattiert mit 2 % amorpher Kieselsäure.

(A9) 32 %-ige wäßrige Dispersion von (U2).

Antiklebemittel (E11) und (E12)

(E11) Wäßriges Präparat mit 32 % Lickeröl (Naturöl) und 3,2 % Polyacrylatemulsion.

(E12) Wäßriges Präparat mit 32 % Lickeröl (Naturöl), 3,2 % Polyacrylatemulsion und 0,02 % Polydimethylsiloxan.

Präparate (W1) bis (W9)

| (W1) Wäßriges Präparat erhalten durch Zusammenmischen der folgenden Komponenten in der angegebenen Reihenfolge: | |
|---|---|
| 73,1 | Teile (A6) |
| 16,7 | Teile entmineralisiertes Wasser |
| 1,2 | Teile (D1) |
| 7,2 | Teile Ammoniumstearat |
| 1,8 | Teile Laurylsulfat Natriumsalz. |
| Viskosität im F.C. 4 = 25-30". | |

| (W2) Wäßriges Präparat erhalten durch Zusammenmischen der folgenden Komponenten in der angegebenen Reihenfolge: | |
|---|---|
| 19 | Teile Pigmentpräparat (Cx) |
| 73,1 | Teile (A6) |
| 18,8 | Teile entmineralisiertes Wasser |
| 1,2 | Teile (D1) |
| 4,7 | Teile Ammoniumstearat |
| 1,8 | Teile Laurylsulfat Natriumsalz. |
| Viskosität im F.C. 4 = 25-30". | |

| (W3) Wäßriges Präparat erhalten durch Zusammenmischen der folgenden Komponenten in der angegebenen Reihenfolge: | |
|---|---|
| 76,1 | Teile (A7) |
| 14,3 | Teile entmineralisiertes Wasser |
| 0,8 | Teile (D1) |
| 6,6 | Teile Ammoniumstearat |
| 1,8 | Teile Laurylsulfat Natriumsalz. |
| Viskosität im F.C. 4 = 25-30". | |

| (W4) Wäßriges Präparat erhalten durch Zusammenmischen der folgenden Komponenten in der angegebenen Reihenfolge: | |
|---|---|
| 19 | Teile Pigmentpräparat (Cx) |
| 76,1 | Teile (A7) |
| 16,3 | Teile entmineralisiertes Wasser |
| 0,8 | Teile (D1) |
| 4,6 | Teile Ammoniumstearat |
| 1,8 | Teile Laurylsulfat Natriumsalz. |
| Viskosität im F.C. 4 = 25-30". | |

| (W5) Wäßriges Präparat erhalten durch Zusammenmischen der folgenden Komponenten in der angegebenen Reihenfolge: | |
|---|---|
| 200 | Teile Pigmentpräparat (Cx) |
| 75 | Teile (E11) |
| 675 | Teile (W1) |
| 200 | Teile (A9) |
| 125 | Teile (A8). |
| Viskosität im F.C. 4 = 25-30". | |

| (W6) Wäßriges Präparat erhalten durch Zusammenmischen der folgenden Komponenten in der angegebenen Reihenfolge: | |
|---|---|
| 200 | Teile Pigmentpräparat (Cx) |
| 75 | Teile (E12) |
| 675 | Teile (W1) |
| 200 | Teile (A9) |
| 125 | Teile (A8). |
| Viskosität im F.C. 4 = 25-30". | |

| (W7) Wäßriges Präparat erhalten durch Zusammenmischen der folgenden Komponenten in der angegebenen Reihenfolge: | |
|---|---|
| 200 | Teile Pigmentpräparat (Cx) |
| 75 | Teile (E11) |
| 700 | Teile (W1) |
| 200 | Teile (P2) |
| 100 | Teile (A8). |
| Viskosität im F.C. 4 = 25-30". | |

| (W8) Wäßriges Präparat erhalten durch Zusammenmischen der folgenden Komponenten in der angegebenen Reihenfolge: | |
|---|---|
| 200 | Teile Pigmentpräparat (Cx) |
| 75 | Teile (E11) |
| 1000 | Teile (W3). |
| Viskosität im F.C. 4 = 25-30". | |

| (W9) Präparate (W9.1) bis (W9.5) Wäßrige Präparate erhalten durch Zusammenmischen der folgenden Komponenten in der angegebenen Reihenfolge: | |
|---|---|
| 190 | Teile Pigmentpräparat (Cx) |
| 1000 | Teile (Al) |
| x | Teile Ammoniumstearat. |
| Viskosität im F.C. 4 = 25-30". | |

(W9.1) x = 2,58;
(W9.2) x = 23,80;
(W9.3) x = 59,50;
(W9.4) x = 66;
(W9.5) x = 95,20.

Die eingesetzten Pigmentpräparate (Cx) sind mit Hydroxyäthylcellulose angeteigte Pigmentpräparate enthaltend in 190 Teilen Pigmentpräparat Pigmente (C) wie folgt:

(C1) 40 Teile C.I. Pigment White 6,

(C2) 30 Teile C.I. Pigment Yellow 34,
(C3) 17 Teile C.I. Pigment Blue 15:1,
(C4) 12 Teile C.I. Pigment Black 7,
(C5) 8 Teile C.I. Pigment Violet 19,
(C6) 30 Teile C.I. Pigment Yellow 42,
(C7) 40 Teile C.I. Pigment Red 101,
(C8) 16 Teile C.I. Pigment Red 170,
(C9) 31 Teile C.I. Pigment Red 104,
(C10) 40 Teile C.I. Pigment Red 146.

Präparate (W9 bis) bis (W9 quinquies)

Die Präparate entsprechen den Polyurethanpräparaten (W9) [insbesondere (W9.1) bis (W9.5)] mit dem Unterschied, daß anstelle von (A1) die gleiche Menge an (A2), (A3), (A4) oder (A5) jeweils eingesetzt wird.

Lackpräparate (L1) bis (L6)

| | | |
|---|---|---|
| (L1) | 90<br>50<br>100 | Teile einer wäßrigen mit Si02 mattierten 20 %-igen Nitrocelluloseemulsion,<br>Teile einer wäßrigen farblosen 14 %-igen Nitrocelluloseemulsion,<br>Teile Wasser. |

| | | |
|---|---|---|
| (L2) | 100 Teile<br>150 Teile | eines farblosen, organisch verdünnbaren 15 %-igen Nitrocelluloselackes,<br>Butylacetat. |

| | | |
|---|---|---|
| (L3) | 100 Teile<br>20 Teile<br>200 Teile | eines farblosen, organisch verdünnbaren 15 %-igen Nitrocelluloselackes,<br>eines mit $SiO_2$ mattierten, organisch verdünnbaren 15 %-igen Nitrocelluloselackes,<br>Butylacetat. |

| | | |
|---|---|---|
| (L4) | 100 Teile<br>100 Teile<br>1,5 Teile<br>5 Teile | einer wäßrigen mit Si02 mattierten 20 %-igen Nitrocelluloseemulsion,<br>Wasser,<br>Vernetzer auf Polyaziridinbasis,<br>Polysiloxan (Griffmittel). |

| | | |
|---|---|---|
| (L5) | 200 Teile<br><br>200 Teile | Polyharnstoffurethan aus 1 Mol Polycaprolactondiol Mw 2000, 2 Mol 4,4'-Dicyclohexylmethandiisocyanat und 0,95 Mol 1,2-Propylendiamin,<br>Butylacetat. |

| | | |
|---|---|---|
| (L6) | 20 Teile<br><br>80 Teile<br>100 Teile<br>10 Teile<br>100 Teile<br>300 Teile | Polyharnstoffurethan aus 1 Mol Polycaprolactondiol Mw 2000, 2 Mol Isophorondiisocyanat und 0,95 Mol Isophorondiamin,<br>eines farblosen, organisch verdünnbaren 15 %-igen Nitrocelluloselackes,<br>Butylacetat,<br>eines aminofunktionellen Polysiloxans,<br>Methoxypropylacetat<br>Methyläthylketon. |

Herstellung der Schäume (S2.1) bis (S9.5.3)

In einem Rotor/Stator Mischer mit zylinderförmigem Mischerkopf, in welchem der rotierende Teil und der statische Teil an den einander zugewandten Zylinderwänden mit quadratischen Stiften in geraden, parallelen Reihen besetzt sind, und mit fogenden Spezifikationen

Zahnhöhe 1,2 cm,
Zahndichte $2 \cdot cm^{-2}$,
Mittlerer Durchmesser des Mischers 12 cm,
Verhältnis der Zahnscherlänge zum Kopfvolumen 1:45,

so daß die Rotorstifte in den Statorstiften kämmen, werden die Präparate (W2) bis (W9.5.3) bei einem Überdruck von 0,4 bar zu feinen, stabilen, gießbaren Schäumen mit folgenden Litergewichten (bei 20°C und Normaldruck gemessen) verschäumt:

Aus (W2) der Schaum (S2.1) von 550 g/l.
Aus (W2) der Schaum (S2.2) von 640 g/l.
Aus (W4) der Schaum (S4.1) von 550 g/l.
Aus (W4) der Schaum (S4.2) von 600 g/l.
Aus (W4) der Schaum (S4.3) von 640 g/l.
Aus (W5) der Schaum (S5) von 600 g/l.
Aus (W6) der Schaum (S6) von 550 g/l.
Aus (W7) der Schaum (S7) von 550 g/l.
Aus (W8) der Schaum (S8) von 640 g/l.
Aus (W9.1) bis (W9.5) die Schäume (S9.1.1) bis (S9.5.1) von 500 g/l.
Aus (W9.1) bis (W9.5) die Schäume (S9.1.2) bis (S9.5.2) von 550 g/l.
Aus (W9.1) bis (W9.5) die Schäume (S9.1.3) bis (S9.5.3) von 600 g/l.

Auf analoge Weise wie die Präparate (W9) werden die ensprechenden Präparate (W9 bis) bis (W9 quinquies) im oben beschriebenen Mischer zu den jeweiligen Schäumen (S9 bis) bis (S9 quinquies) verschäumt, wobei mit steigendem Gehalt an Ammoniumstearat die Stabilität der Schäume zunimmt.

Applikationsbeispiel A

Gegerbtes, Rindspaltleder wird mit dem Vorgrundierungspräparat (V1) in einer Auftragsmenge von 40 g/$m^2$ mit einer Airless-Spritzpistole oder mit einem Rollrakel beschichtet, im Trockenkanal getrocknet und bei 80°C und 100 bar gebügelt. Danach wird der Schaum (S2.1) [(C) = (C1)] mit einem Rollrakel in einer Auftragsmenge von 250 g/$m^2$ aufgetragen und im Trockenkanal (Länge 15 m, Eingangstemperatur 55°C, mit Rücklauftrocknung) getrocknet. Auf die getrocknete Schaumschicht wird nun ein Zwischenlack (L1) in einer Auftragsmenge von 20 g/$m^2$ mit einer Spritzpistole aufgetragen und dann bei 90°C und 250 bar 3" geprägt. Darauf wird noch ein Schlußlack (L2) zweimal hintereinander in einer Auftragsmenge von jeweils 25 g/$m^2$ aufgesprüht, im Trockenkanal getrocknet und dann bei 80°C und 75 bar gebügelt. Man erhält ein weiches, weißes, schön geprägtes Leder.
Auf analoge Weise wird Schweinsspaltleder zugerichtet.

Applikationsbeispiel B

Gegerbtes, vollnarbiges, gelbgefärbtes Rindleder (für Polstermöbel) wird mit dem Vorgrundierungspräparat (V2) in einer Auftragsmenge von 40 g/$m^2$ mit einer normalen Luft-Spritzpistole (oder mit roller coater) beschichtet und im Trockenkanal getrocknet. Danach wird der Schaum (S5) [(C) = (C2)] mit einer HVLP-Spritzpistole in einer Auftragsmenge von 120 g/$m^2$ aufgetragen, im Trockenkanal (Länge 15 m, Eingangstemperatur 60°C, mit Rücklauftrocknung) getrocknet und bei 80°C und 200 bar geprägt oder bei 70°C und 40 bar gebügelt. Auf die geprägte oder gebügelte Schaumschicht wird nun ein Schlußlack (L3) zweimal hintereinander in einer Auftragsmenge von je 30 g/$m^2$ aufgesprüht und dann im Trockenkanal getrocknet, danach wird 6 Stunden gewalkt und gespannt. Man erhält ein weiches, gleichmäßig ausgerüstetes Leder intensiver gelber Farbe.

Applikationsbeispiel C

Gegerbtes, vollnarbiges, braungefärbtes Rindleder (für Autopolster) wird mit dem Vorgrundierungspräparat

(V3) in einer Auftragsmenge von 40 g/m$^2$ mit einer normalen Luft-Spritzpistole oder mit einem Raster beschichtet und im Trockenkanal getrocknet. Danach wird der Schaum (S6) [(C) = (C7)] mit einer HVLP-Spritzpistole in einer Auftragsmenge von 150 g/m$^2$ aufgetragen und im Trockenkanal (Länge 15 m, Eingangstemperatur 60°C, mit Rücklauftrocknung) getrocknet. Auf die getrocknete Schaumschicht wird nun ein Schlußlack (L4) zweimal hintereinander in einer Auftragsmenge von je 40 g/m$^2$ aufgesprüht, im Trockenkanal getrocknet und dann bei 80°C und 200 bar 3" geprägt, danach 4 Stunden gewalkt und gespannt. Man erhält ein weiches, schön geprägtes Leder intensiver brauner Farbe.

<u>Applikationsbeispiel D</u>

Gegerbtes, geschliffenes, dunkelrot gefärbtes Schafleder (Bekleidungsleder) wird mit dem Vorgrundierungspräparat (V4) in einer Auftragsmenge von 30 g/m$^2$ mit einem Rollrakel (roller coater) beschichtet und im Trockenkanal getrocknet. Danach wird der Schaum (S7) [(C) = (C5)] mit einer HVLP-Spritzpistole in einer Auftragsmenge von 150 g/m$^2$ aufgetragen und im Trockenkanal (Länge 15 m, Eingangstemperatur 60°C, mit Rücklauftrocknung) getrocknet. Auf die getrocknete Schaumschicht wird nun ein Schlußlack (L6) zweimal hintereinander in einer Auftragsmenge von je 20 g/m$^2$ aufgesprüht, im Trockenkanal getrocknet und dann bei 80°C und 200 bar 3" geprägt oder bei 70°C und 40 bar gebügelt, danach wird 4 Stunden gewalkt und gespannt. Man erhält ein weiches, schönes Leder intensiver weinroter Farbe.

Anstelle der eingesetzten Lackpräparate können in den obigen Applikationsbeispielen A bis D die übrigen der Lackpräparate (L1) bis (L6) eingesetzt werden.

Auf analoge Weise wie die jeweiligen geschäumten Präparate (S2.1), (S5), (S6) und (S7) werden in den obigen Applikationsbeispielen A bis D die übrigen der geschäumten Präparate (S2.1) bis (S9.5.3) auf Leder entsprechender Farbe eingesetzt. Analog werden anstelle der Präparate (S2.1) bis (S9.5.3) die jeweiligen Präparate (S9 bis) bis (S9 quinquies) eingesetzt. In allen Fällen werden sehr schöne, weiche Leder entsprechender Farbe erhalten, wobei in den geprägten Erzeugnissen die Prägungen besonders schön sind.

## Patentansprüche

**1.** Wäßriger, durch maschinelles Verschäumen eines entsprechenden wäßrigen Präparates (W) erzeugter, gießbarer und spritzbeständiger Schaum (S), worin die wäßrige Phase

(A) ein härtbares Polymersystem, welches aus

(U) einem ionomeren, Polyätherketten enthaltenden Polyurethan oder einem Gemisch solcher ionomerer Polyurethane

und gegebenenfalls

(P) einem oder mehreren weiteren, zusammen mit (U) härtbaren Polymeren,

besteht,
und (B) mindestens einen Schaumstabilisator

enthält, wobei (U) 30 bis 100 Gewichtsprozent von (A) ausmacht und das Litergewicht von (S) bei 20°C und Normaldruck im Bereich von 400 bis 700 g liegt, und wobei die Polyätherketten in (U) aus Makrodiolen stammen, welche Polyätherdiole sind.

**2.** Wäßriger Schaum (S) gemäß Anspruch 1, zusätzlich enthaltend

(C) mindestens einen Farbstoff,
(D) mindestens ein Verlaufmittel und/oder Netzmittel,
(E) mindestens ein Antiklebemittel und/oder Weichmacher,
(F) mindestens ein Mattierungsmittel
und/oder (G) mindestens einen UV-Absorber oder/und mindestens ein Antioxydans.

**3.** Wäßriger Schaum (S) gemäß Anspruch 1 oder 2, erhalten durch Mischen von (W) mit Luft.

**4.** Verfahren zur Herstellung eines Schaumes (S) gemäß Anspruch 1, dadurch gekennzeichnet, daß man (W) in

einem Mischer (M) mit Luft mischt.

**5.** Verfahren nach Anspruch 4, dadurch gekennzeichnet, daß (M) ein Rotor/Stator Mischer ist, in welchem der mit dem Rotor verbundene, kolbenförmige Teil des Mischerkopfes mit radial fest angebrachten Stiften besetzt ist und der mit dem Stator verbundene zylinderförmige Teil des Mischerkopfes ebenfalls mit radial fest angebrachten Stiften besetzt ist, so daß beim Betrieb des Mischers unter Zuspeisung von (W) und Luft im Mischerkopf eine wirksame Verschäumung erfolgt und ein im wesentlichen nicht expandierter feiner Schaum (S) dem Mischer (M) entnommen wird.

**6.** Verwendung von (S) gemäß einem der Ansprüche 1 bis 3 zur Beschichtung von Substraten, die an sich mit wäßrigen Kunstharzpräparaten beschichtet werden können.

**7.** Verwendung gemäß Anspruch 6 zur Beschichtung von gegebenenfalls mit einem Vorgrund vorbeschichtetem Leder.

**8.** Verwendung gemäß Anspruch 6 oder 7, dadurch gekennzeichnet, daß man das mit (S) beschichtete Substrat bei Temperaturen ≤ 80°C trocknet.

**9.** Verwendung gemäß einem der Ansprüche 6 bis 8, dadurch gekennzeichnet, daß man das beschichtete getrocknete Material, gegebenenfalls nach mindestens einem Zwischenauftrag, mit mindestens einem Schlußauftrag beschichtet.

**10.** Verwendung nach einem der Ansprüche 6 bis 9, dadurch gekennzeichnet, daß die mit (S) auf das Substrat aufgetragene Schaumbeschichtung nach dem Trocknen eine dem verwendeten Schaum (S) entsprechende Schaumstruktur aufweist.

## Claims

**1.** Aqueous, pourable and spray-resistant foam (S) produced by mechanical foaming of a corresponding aqueous composition (W), wherein the aqueous phase contains

(A) a curable polymer system, which consists of

(U) an ionomeric, polyether-chains-containing polyurethane or a mixture of such ionomeric polyurethanes

and optionally

(P) one or more further polymers, curable together with (U),

and (B) at least one foam-stabilizer

(U) amounting to 30 to 100 percent by weight of (A) and the liter-weight of (S) at 20°C and normal pressure being in the range of 400 to 700 g, and where the polyether chains in (U) derive from macrodiols which are polyetherdiols.

**2.** Aqueous foam (S) according to Claim 1, further containing

(C) at least one dye,
(D) at least one flow-control agent and/or wetting agent,
(E) at least one antiblocking agent and/or plasticizer,
(F) at least one delustering agent
and/or (G) at least one UV-absorber or/and at least one antioxidant.

**3.** Aqueous foam (S) according to Claim 1 or 2, obtained by mixing (W) with air.

**4.** Process for the production of a foam (S) according to Claim 1, characterized in that (W) is mixed with air in a mixer (M).

5. Process according to Claim 4, characterized in that (M) is a rotor/stator mixer, in which the cylindric part of the mixer head connected to the rotor is fitted with radially firmly applied pegs and the cylindric portion of the mixer head connected to the stator is also fitted with radially firmly applied pegs, so that, when operating the mixer with feeding of (W) and air, an efficient foaming takes place in the mixer head and a substantially non-expanded fine foam (S) is discharged from the mixer (M).

6. Use of (S) according to any of Claims 1 to 3 for the coating of substrates that are per se coatable with aqueous synthetic resin compositions.

7. Use according to Claim 6 for the coating of leather which is optionally pre-coated with a base coat.

8. Use according to Claim 6 or 7, characterized in that the substrate coated with (S) is dried at a temperature ≤ 80°C.

9. Use according to anyone of Claims 6 to 8, characterized in that the coated dried material is top-coated with at least one top-coating composition, optionally after at least one pre-top coating.

10. Use according to anyone of Claims 6 to 9, characterized in that the foamed layer applied with (S) to the substrate displays upon drying a foam structure corresponding to the employed foam (S).

**Revendications**

1. Mousse aqueuse (S) susceptible d'être versée et résistante à la projection, produite par moussage mécanique d'une composition aqueuse correspondante (W), dans laquelle la phase aqueuse contient

    (A) un système polymère durcissable qui est constitué

        (U) d'un polyuréthane ionomère contenant des chaînes polyéther ou d'un mélange de tels polyuréthanes ionomères

        et éventuellement

        (P) d'un ou de plusieurs autres polymères durcissables ensemble avec (U),

    et (B) au moins un stabilisateur de mousse,

    (U) représentant de 30 à 100 pour cent en poids de (A) et le poids du litre de (S) à 20°C et sous pression normale étant compris dans l'intervalle de 400 à 700g, et les chaînes polyéther dans (U) dérivant de macrodiols qui sont des polyétherdiols.

2. Mousse aqueuse (S) selon la revendication 1, contenant en outre

    (C) au moins un colorant,
    (D) au moins un agent d'enduction et/ou un agent mouillant,
    (E) au moins un agent antiadhésif et/ou un plastifiant,
    (F) au moins un agent de matage
    et/ou (G) au moins un absorbant UV et /ou au moins un antioxydant.

3. Mousse aqueuse (S) selon la revendication 1 ou 2, obtenue par mélange de (W) avec de l'air.

4. Procédé de préparation d'une mousse (S) selon la revendication 1, caractérisé en ce qu'on mélange (W) avec de l'air dans un mélangeur (M).

5. Procédé selon la revendication 4, caractérisé en ce que (M) est un mélangeur rotor/stator dans lequel la partie cylindrique de la tête du mélangeur qui est reliée au rotor, est garnie de pointes fixées solidement en position radiale et la partie cylindrique de la tête du mélangeur qui est reliée au stator, est également garnie de pointes fixées solidement en position radiale, de sorte que lors du fonctionnement du mélangeur avec alimentation de (W) et d'air dans la tête du mélangeur, il se produise un moussage efficace et qu'une fine mousse (S) essentiellement

non expansée soit déchargée du mélangeur (M).

**6.** Utilisation de (S) selon l'une quelconque des revendications 1 à 3, pour l'enduction de substrats qui peuvent en soi être enduits avec des compositions aqueuses de résines synthétiques.

**7.** Utilisation selon la revendication 6, pour l'enduction du cuir éventuellement enduit au préalable avec une couche de fond.

**8.** Utilisation selon la revendication 6 ou 7, caractérisée en ce que le substrat qui a été enduit avec (S) est séché à des températures $\leq$ 80°C

**9.** Utilisation selon l'une quelconque des revendications 6 à 8, caractérisée en ce que la matière qui a été enduite et séchée est enduite avec au moins une couche de finition, éventuellement après l'enduction d'au moins une couche intermédiaire.

**10.** Utilisation selon l'une quelconque des revendications 6 à 9, caractérisée en ce que la couche de mousse obtenue par application de (S) sur le substrat, présente après séchage une structure alvéolaire correspondant à la mousse (S) utilisée.